# EUROPEAN PATENT APPLICATION

(11) **EP 1 894 682 A2**
(43) Date of publication of application: **05.03.2008**
(21) Application number: 07114901.7
(22) Date of filing: 24.08.2007
(51) Int. Cl.: B25J 9/16

(54) **Robotic programming control using multiple binary input**

(30) Priority: 31.08.2006 US 513349
(71) Applicant: General Electric Company, Schenectady, NY 12345 (US)
(72) Inventor: Sassatelli, John Matthew, Valley Falls, NY 12185 (US); Burnett, Mark Edward, Barton, NY 13734 (US); Nolan, John Francis, Scotia, NY 12301 (US); Cutler, Jeffrey Paul, Cohoes, NY 12047 (US); Cook, Carter Steven, Westford, NY 13488 (US); Parker, David Roy, Richfield Springs, NY 13439 (US)
(74) Representative: Illingworth-Law, William Illingworth

(57) **Abstract**

A method of programming robotic control includes the steps of defining executable actions in a control loop, and establishing sub-programs that effect modifications of or additions to the executable actions. The sub-programs are executed according to external binary inputs. The external binary inputs are provided during execution of the control loop so that the sub-programs can be executed as part of the control loop.

## Description

### BACKGROUND OF THE INVENTION

The invention relates to programming methodology and, more particularly, robotic programming control using external binary inputs to modify programmed executable actions.

Robots are particularly suited for performing the same automated task over and over again. In some industries, such as repair services organizations, however, the jobs are not identical from one to the next. As a consequence, constant adjustment of the automated program is required. Conventional control programs, however, do not allow for such adjustments in an automatic operation mode, but rather require rewriting of entire sections of motion control code.

It has been alternatively proposed to precisely fixture and locate all parts presented to the robot so that adjustments of the automated program are not required. This action, however, adds significant cost and time to the work being performed.

### BRIEF DESCRIPTION OF THE INVENTION

In an exemplary embodiment of the invention, a method of programming robotic control includes the steps of defining executable actions in a control loop; establishing sub-programs that effect modifications of or additions to the executable actions, the sub-programs being executed according to external binary inputs; and providing the external binary inputs during execution of the control loop.

### BRIEF DESCRIPTION OF THE DRAWINGS

Embodiments of the present invention will now be described, by way of example only, with reference to the accompanying drawings, in which:
FIGURE 1 is a schematic illustration of the robotic control programming hardware; and
FIGURE 2 is a flowchart of the programming method.

### DETAILED DESCRIPTION OF THE INVENTION

The programming method described herein for robotic control utilizes external binary inputs rather than fixed motion control and PLC software. Generally, the robot executes a loop, where it checks to see if binary coded inputs have been set, and if so, the robot executes the step called for by the input. It then cycles the loop again to check for another input.

Essentially, the method takes advantage of the processing speed of the robot to execute infinitely short programs, which are integrated and real-time to form the resultant full program. This allows for modifications of or additions to programmed executable actions, which in the context of an arc welding robot may include modifying torch position/angle, initiating arc start/end, moving from point to point and the like to happen sequentially and to be modified flexibly to suit the application at hand. Inputs to the binary input string can come from switch boxes, joystick controllers, sensors and/or external computer controls that apply engineering rules to other inputs. Exemplary engineering rules include, without limitation, amperage limits, pre-heat requirements, soft limits of robot movement, and the like.

The method allows override of the process in execution to optimize the program based on data collected on the process by sensors or human monitoring. The robot executes individual commands as programs or sub-routines, which are combined to form the resultant full program automatically and in real time. The system combines sensor and/or human inputs to the engineering rules established in the control system.

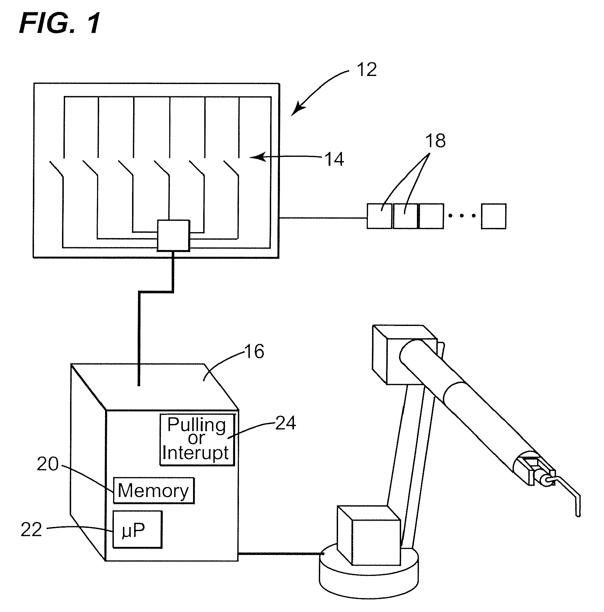

FIG. 1 is a schematic illustration of an exemplary robotic arm subject to the programming control method described herein. A standard electrical enclosure 12 is modified to contain a plurality of micro switches 14 that are connected through inputs on a robotic controller 16. One suitable controller is an AX controller available from OTC Limited of Osaka, Japan. The noted controller is exemplary, and those of ordinary skill in the art will appreciate that other suitable controllers may be utilized. Each of the switches 14 acts as an ON/OFF signal that the controller 16 recognizes singly or in combination as a binary input.

A plurality of sensors 18 monitor operating conditions of the robot. The sensors 18 communicate with the switches 14 and activate or deactivate specific switches according to sensed operating conditions and the engineering rules. In one example, the sensors 18 may activate switches to provide an alert if one of the robot operating conditions approaches or exceeds a corresponding engineering parameter limit. Any number of sensors 18 may be provided. Exemplary sensors include temperature sensors, robot position sensors (OB sensors), emergency stop switch sensors, electrical sensors (voltage, amperage), weld temperature sensors, and the like. In addition to manual human inputs, the sensors 18 activate specific switches 14 to provide the binary input for modifications of or additions to the programmed executable actions.

A logic program stored in a memory 20 is executed by a processor 22 within the robotic controller 16 to effect responses to the inputs. In this manner, the robotic controller 16 is programmed to perform executable actions from a control loop. The controller 16 includes one of a polling mechanism or an interrupt mechanism 24 in communication with the binary inputs. In the event that a modification of or addition to the executable actions is required, the program can be modified during execution of the control loop by a combination of inputs via the switches 14 controlled by a person or computer.

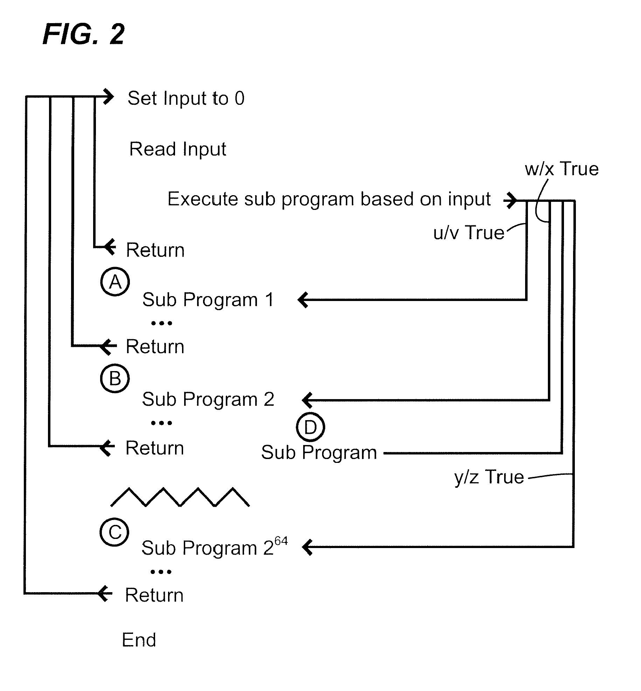

FIG. 2 is a flowchart illustrating an approximation of the process. The process described herein enables execution of motion/PLC commands in a system that does not typically allow for it since a typical robotic platform utilizes a closed programming architecture, which does not allow for real-time input. Instead of executing a program of A then B then C, where it is up to the operator to verify that all of the external inputs to the system are correct, as the robot cannot verify them; the robot rather performs executable actions in a control loop, and if U and V are true, then the robot performs A, then once W and X are true, the robot performs B, the operator may witness an adjustment to be made, such as adjustment D, then once Y and Z are true, the robot will lastly perform C. The end result is the same, but the additional sensor inputs and adjustment abilities appear seamless to the operator and allow for infinitely variable modifications in a much simpler manner than rewriting entire sections of motion control code.

The external source communicates with the controller by completing a circuit through the input block of the controller, similar to turning a light on using a switch. The combination of inputs combined represents the binary number that the controller uses to determine a sub-program (A-D) to execute.

The method described herein takes advantage of robot processing speed to execute short programs that are integrated to form a resultant full program. As a consequence, predefined executable actions for robot control can be modified in real-time using a binary input string.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A method of programming robotic control for a robot comprising:
defining executable actions within a control loop;
establishing sub-programs that effect modifications of or additions to the executable actions, the sub-programs being executed according to external binary inputs; and
providing the external binary inputs during execution of the control loop.

2. A method according to claim 1, wherein the providing step is practiced by comparing the external binary inputs to preset rules.

3. A method according to claim 1, wherein the providing step is practiced by a controller sensing the external binary inputs via communication with an external source.

4. A method according to claim 3, wherein the external source comprises an electrical enclosure (12) containing a plurality of switches (14), and wherein the providing step is practiced by one of polling the plurality of switches or an interrupt mechanism (24) in communication with the switches.

5. A method according to claim 1, wherein the robotic control is for a welding robot, and wherein the modifications of or additions to the executable actions comprise at least one of modifying a torch position, modifying a torch angle, initiating an arc start, initiating an arc end, motion from point to point, and welding parameters.

6. A method according to claim 1, wherein the providing step is practiced by one of polling the binary input or an interrupt mechanism (24) in communication with the binary inputs.

7. A method according to claim 1, further comprising monitoring operating conditions of the robot, wherein the external inputs are provided in the providing step based on the robot operating conditions.

8. A method according to claim 7, further comprising providing an alert if one of the robot operating conditions approaches or exceeds a corresponding engineering parameter limit.

9. A control system for a welding robot comprising:
a memory (20) storing a computer program defining executable actions within a control loop and storing sub-programs that effect modifications of or additions to the executable actions, the sub-programs being executed according to external binary inputs;
a processor (22) communicating with the memory and executing the computer program; and
an external source (12, 14, 18) providing the external binary inputs during execution of the control loop.

10. A control system according to claim 9, further comprising a controller (16) sensing the external binary inputs via communication with the external source.

11. A control system according to claim 10, wherein the external source comprises an electrical enclosure (12) containing a plurality of switches (14), and wherein the controller effects sensing by one of polling the plurality of switches or with an interrupt mechanism (24) in communication with the switches.

12. A control system according to claim 9, wherein the modifications of or additions to the executable actions comprise at least one of modifying a torch position, modifying a torch angle, initiating an arc start, initiating an arc end, motion from point to point, and welding parameters.

13. A control system according to claim 9, further comprising one of a polling mechanism or an interrupt mechanism (24) communicating with the external source.

14. A control system according to claim 9, further comprising a plurality of sensors (18) coupled with the robot that monitor operating conditions of the robot, wherein the external inputs are provided based on the robot operating conditions.
